# EUROPEAN PATENT SPECIFICATION

(11) **EP 4 275 242 B1**
(45) Date of publication and mention of the grant of the patent: **26.11.2025**
(21) Application number: 21700836.6
(22) Date of filing: 05.01.2021
(51) Int. Cl.: H01M 8/04029

(54) **COOLING SYSTEM FOR A FUEL CELL SYSTEM**
KÜHLSYSTEM FÜR EIN BRENNSTOFFZELLENSYSTEM
SYSTÈME DE REFROIDISSEMENT POUR SYSTÈME DE PILE À COMBUSTIBLE

(43) Date of publication of application: 15.11.2023
(73) Proprietor: VOLVO TRUCK CORPORATION, 405 08 Göteborg (SE)
(72) Inventor: ARYA, Pranav, 412 85 Göteborg (SE); BLOMGREN, Fredrik, 425 35 Hisings Kärra (SE); KARLSSON, Stina, 413 04 Göteborg (SE)
(74) Representative: Zacco Sweden AB
(86) International application number: PCT/EP2021/050069
(87) International publication number: WO 2022/148526

(56) References cited:
- EP-A2- 1 265 305
- EP-A2- 1 384 967

## Description

### TECHNICAL FIELD

The invention relates to a cooling system for a fuel cell system and to a fuel cell system provided with such a cooling system.

The invention can typically be applied in fuel cell systems used as a part of an electric driveline of heavy-duty vehicles, such as trucks, buses and construction equipment. Other applications are also possible.

### BACKGROUND

There is an increasing interest in vehicles provided with electric drivelines where an electric motor powered by an electricity source provides propulsion force to the wheels of the vehicle. The electricity source may be a battery pack or a fuel cell system where a fuel, such as a fuel with first and second fuel components hydrogen and oxygen, is converted in a fuel cell stack while producing electricity. Hydrogen may be stored in a pressure tank on-board the vehicle while oxygen may be obtained from air fed to the fuel cell stack.

Besides electricity, the fuel cell stack produces heat during operation, in particular during high-load operation, and a fuel cell system is therefore normally provided with a cooling system for cooling the fuel cell stack.

DE102010011556A1 discloses a cooling system for a fuel cell system using e.g. hydrogen as one of the fuel components. The hydrogen is stored in a pressure tank and fed to the fuel cell stack via an expander device where the pressure of the hydrogen is significantly reduced. Due to the pressure decrease the hydrogen cools down and to raise the temperature of the hydrogen sufficiently before it enters the fuel cell stack, the hydrogen is heated in a heat exchanger arranged downstream the expander device. The cooling system includes a cooling medium/coolant that is recirculated in a cooling loop including i) the heat exchanger used for heating the hydrogen (and where heat thus is transferred from the coolant to the hydrogen), ii) the fuel cell stack (where heat is transferred from the stack to the coolant), iii) a further heat exchanger for cooling the coolant (where heat is transferred from the coolant to ambient air), iv) a pump for recirculating the coolant, v) a further component to be cooled (where heat is transferred from the further component to coolant), and back to the hydrogen heat exchanger.

A fuel cell cooling system, such as the system disclosed in DE102010011556A1, must be designed to be capable of handling also high-load situations where the fuel cell stack generates much more heat than during normal operation. This may be solved by "oversizing" the system, i.e. by allowing for recirculation of a higher mass flow rate of coolant than normally needed and a more effective cooling in the ambient air-heat exchanger than normally needed. Such an oversized design increases costs and requires more space since it requires e.g. a higher potential pump capacity and a larger ambient air-heat exchanger and/or a sophisticated fan arrangement for generating a forced flow of cooling

As a further prior art fuel cell cooling system, reference is made to EP1384967 A2 which discloses the features of the preamble of independent claim 1.

There is thus a need for smaller and less costly fuel cell cooling systems but that still are capable of handling at least temporary fuel cell high-load operation.

### SUMMARY

The invention relates to a cooling system for cooling of a fuel cell assembly, wherein the cooling system comprises a cooling loop for recirculation of a cooling medium and a cooling medium flow line. The cooling medium flow line comprises a first cooling medium buffer tank, a first heat exchanger for cooling of the cooling medium, and a second cooling medium buffer tank. The first cooling medium buffer tank is arranged upstream the first heat exchanger so as to allow collection, storing and discharge of cooling medium before it reaches the first heat exchanger, and the second cooling medium buffer tank is arranged downstream of the first heat exchanger so as to allow collection, storing and discharge of cooling medium that has passed through and been cooled in the first heat exchanger.

Such a cooling system makes it possible to build up a buffer of cooled cooling medium in the second cooling medium buffer tank, which can be used to improve cooling of the fuel cell assembly (or other device to be cooled) during high-load situations. For instance, the cooling medium flow line can be fluidly connected to a primary cooling loop when additional cooling is needed so as to feed a flow of buffered cooling medium from a downstream part of the cooling medium flow line into the primary cooling loop and thereby lower the temperature of the cooling medium in the primary cooling loop (while, typically, feeding a corresponding flow of (warmer) cooling medium from the primary cooling loop into an upstream part of the cooling medium flow line). During normal or low-load operation of the fuel cell assembly, the cooling medium flow line may be disconnected from the primary cooling loop and the buffer of cooled cooling medium can be built up again.

According to the invention, the first cooling medium buffer tank compensates for the amount (volume) of cooling medium contained in the second cooling medium buffer tank so that the total volume of cooling medium in the conduits etc. of the cooling system is constant. That is, if the first buffer tank is full the second tank is empty, if the first buffer tank is half-full also the second buffer tank is half-full, etc. For a closed cooling system using a cooling medium that is substantially incompressible and that does not exhibit any significant thermal expansion, such as a mix of water and ethylene glycol, in order to maintain the pressure in the cooling loop, there should be some form of collection or buffer tank for collecting/buffering cooling medium when additional cooled cooling medium is fed to the cooling loop.

The above cooling system is advantageously applied to a fuel cell system where the cooling medium is used to heat an expanded and cooled fuel gas, such as hydrogen, in which case the first heat exchanger mentioned above preferably forms the means for transferring heat from the cooling medium to the fuel. However, the first heat exchanger does not necessarily have to be connected to a fuel of a fuel cell. For instance, a heat pump system may be provided comprising a compressor, a condenser, an expansion valve, and an evaporator configured to compress, condense, expand and evaporate, respectively, a medium recirculating in the heat pump system. The evaporator of such a heat pump system may form the first heat exchanger which thus is configured to transfer heat from the cooling medium to, in this case, the medium recirculating in the heat pump system. This is useful also for a fuel cell system, for instance when there is no fuel expander in the fuel line or when it is not possible or reasonable for some other reason to use fuel in the first heat exchanger.

In the cooling system according to the invention, the first and second cooling medium buffer tanks are arranged in a common tank, wherein the common tank is provided with a movable separator that separates the first cooling medium buffer tank from the second cooling medium buffer tank. Such a common tank minimizes the space required, which is particularly important for fuel cell systems arranged on vehicles. Preferably, the movable separator is thermally insulated to minimize heat transfer between the two tank compartments. Also the entire common tank is preferably thermally insulated.

In an embodiment of the cooling system, the cooling medium flow line further comprises a first pump configured to feed cooling medium from the first cooling medium cooling tank, and/or from an upstream part of the cooling medium flow line, towards and through the first heat exchanger and further towards the second cooling medium buffer tank. Whether the first pump feeds cooling medium from the first cooling medium buffer tank and/or from the upstream part of the cooling medium flow line (upstream of the first cooling medium buffer tank) depends on whether the first cooling medium buffer tank is empty or not and on whether the cooling medium flow line is fluidly connected to a cooling loop so that cooling medium is supplied to the upstream part of the cooling medium flow line. It may also depend on the detailed structure of the upstream part of the cooling medium flow line, which may be arranged so that cooling medium may flow through the first cooling medium buffer tank via a separate inlet and a separate outlet thereof, or it may be arranged so that cooling medium may flow in a channel that branches towards the first heat exchanger and towards the first cooling medium buffer tank allowing cooling medium to flow into or out from the first cooling medium buffer tank through a single inlet/outlet opening thereof depending on pressure differences.

When the first heat exchanger forms the heat exchanger for heating the hydrogen or other fuel for a fuel cell as mentioned above, the first pump is preferably operated in response to the flow of hydrogen, which in turn depends on the load of the fuel cell. At least in such a case, the first pump should preferably be operable independently of other pumps and parts of the cooling system.

In an embodiment of the cooling system, the cooling medium flow line further comprises a second pump configured to feed cooling medium from the second cooling medium buffer tank, and/or from a downstream part of the cooling medium flow line, further downstream and out from the cooling medium flow line. In similarity to what is mentioned above regarding the first cooling medium buffer tank, the cooling medium may flow differently depending on whether the second cooling medium buffer tank is empty or not and on the detailed structure of the cooling medium flow line. Typically, the cooling medium flow line becomes or is set to be fluidly connected to the cooling loop when starting the second pump. This can be achieved by providing a pressure relief valve at an inlet of the cooling medium flow line that opens due to a pressure increase in the cooling loop generated when starting the second pump. A more sophisticated and controllable valve arrangement may, however, be used. Further pumps may also be used to control the pressure in the cooling loop.

In an embodiment of the cooling system, the cooling system comprises a primary cooling loop, wherein the cooling medium flow line is connected to the primary cooling loop via flow regulation means configured to control a flow of cooling medium between the primary cooling loop and the cooling medium flow line. The flow regulation means may include one or more pumps, such as the second pump, and various valve arrangements, that may or may not be intended to be actively controlled, such as a relief valve that controls itself so to say in contrast to a valve that is actively controlled by a control system in response to certain, flows, pressures, temperatures, etc..

In an embodiment of the cooling system, the primary cooling loop comprises: a fuel cell cooling structure arranged in association with the fuel cell assembly so as to allow transfer of heat from the fuel cell assembly to cooling medium flowing through the fuel cell cooling structure; a primary heat exchanger for cooling of cooling medium that has been heated by the fuel cell assembly; and a primary pump configured to recirculate cooling medium.

The fuel cell cooling structure typically comprises some kind of channel structure allowing heat transfer between the cooling medium and the fuel cell assembly (or other component to be cooled by the cooling system). The cooling channel structure may be inside the fuel cell assembly so that cooling medium flows into and out from the assembly or may be outside of the fuel cell assembly so as to exchange heat with a further cooling loop arranged partly inside the fuel cell assembly.

The primary heat exchanger may use air for cooling of the cooling medium and may be arranged at the front of a vehicle in a vehicle application. A fan for creating a forced air flow may be arranged in association with the primary heat exchanger to increase heat exchange efficiency.

The flow order in the primary cooling loop is preferably, primary pump - fuel cell cooling structure - primary heat exchanger - and back to primary pump.

At moderate or low demands for cooling it may be sufficient to use only the primary cooling loop for cooling. The primary pump may then be the only pump arranged to recirculate cooling medium in the primary cooling loop. At high loads and/or when the second cooling medium buffer tank is full, the second pump may be started so as to fluidly connect the cooling medium flow line to the primary cooling loop and create a larger cooling loop including both the cooling medium flow line and primary cooling loop. The recirculation of cooling medium through this larger cooling loop may be controlled by primary pump in cooperation with the second pump. A part of the primary cooling loop extending between inlet and outlet of the cooling medium flow line may generally not form part of the larger cooling loop. When the cooling medium flow line is connected to the primary cooling loop, the cooling system may be controlled so that cooling medium flows only in the larger cooling loop or both in the larger cooling loop and through the part of the primary cooling loop extending between inlet and outlet of the cooling medium flow line.

In an embodiment of the cooling system, the cooling system comprises a temperature sensor arranged to measure a representation of a temperature of the cooling medium in the cooling loop. This can be used for controlling e.g. the second pump. Preferably, the temperature sensor is arranged to measure a representation of the temperature of the cooling medium at an inlet to the fuel cell cooling structure.

In an embodiment of the cooling system, the flow regulation means comprises a pump and/or a pressure relief valve and/or a controllable three-way valve.

In an embodiment of the cooling system, a downstream part of the cooling medium flow line is arranged to connect to the primary cooling loop between the primary pump and the fuel cell cooling structure.

In an embodiment of the cooling system, the cooling system is configured to allow control of a cooling medium pressure, and/or a cooling medium mass/volume flow rate, in the fuel cell cooling structure, and allow control of a flow of cooling medium into the cooling medium flow line by controlling the primary pump, the second pump and/or the flow regulation means.

The invention also relates to a fuel cell system comprising: a fuel cell assembly provided with at least one fuel cell configured to generate electricity by converting a fuel comprising at least a first fuel component; and a cooling system configured for cooling of the fuel cell assembly, wherein the cooling system is arranged according to above.

In an embodiment of the fuel cell system, the system further comprises: a pressure tank for pressurized storage of the first fuel component; an expander device for reducing the pressure of the first fuel component contained in the pressure tank; and a fuel supply line for feeding the first fuel component from the pressure tank to the fuel cell assembly via the expander device, wherein the first heat exchanger is arranged for exchanging heat between the cooling medium and the first fuel component so as to allow cooling of the cooling medium and heating of the first fuel component by transferring heat from the cooling medium to the first fuel component when the first fuel component has been cooled as a result of pressure reduction in the expander device.

In an embodiment of the fuel cell system, the fuel cell system comprises an additional heat exchanger arranged for exchanging heat between the cooling medium and the first fuel component in a way corresponding to that of the first heat exchanger, wherein the additional heat exchanger is arranged downstream of the first heat exchanger in relation to the fuel supply line.

In an embodiment of the fuel cell system, the fuel cell system comprises a cooling system that in turn comprises a primary cooling loop, and wherein first and second cooling medium channels leading to and from the additional heat exchanger are connected to the primary cooling loop.

In an embodiment of the fuel cell system, the fuel cell system is provided with a heat pump system comprising a compressor, a condenser, an expansion valve, and an evaporator configured to compress, condense, expand and evaporate, respectively, a medium recirculating in the heat pump system, wherein the evaporator forms a further heat exchanger configured to transfer heat from the cooling medium to, in this case, the medium recirculating in the heat pump system, and wherein the evaporator is arranged between the first pump and the first heat exchanger so as to pre-cool the cooling medium in the cooling medium flow line before it reaches the first heat exchanger. With such a heat pump system and such a further heat exchanger, the system becomes very efficient and the cooling buffer can quickly be built up.

In an embodiment of the fuel cell system, the first fuel component is hydrogen.

The invention also relates to a vehicle provided with an electric driveline for propulsion of the vehicle, wherein the electric driveline comprises a fuel cell system according to above.

The invention also relates to a method for operating a cooling system according to above, the method comprising: collecting or discharging at a certain volume flow rate cooling medium in or from the first cooling medium buffer tank while, in a compensating manner, discharging or collecting at the same volume flow rate cooling medium that has been cooled in the first heat exchanger from or in the second cooling medium buffer tank so that the total volume of cooling medium contained in the first and second cooling medium buffer tanks remains the same.

The invention also relates to a method for operating a cooling system according to above, the method comprising: operating the first pump so as to feed cooling medium from the first cooling medium buffer tank, and/or from an upstream part of the cooling medium flow line, towards and through the second heat exchanger and further towards the second cooling medium buffer tank.

The invention also relates to a method for operating a cooling system according to above, the method comprising: operating the second pump so as to feed cooling medium from the second cooling medium buffer tank, and/or from a downstream part of the cooling medium flow line, further downstream and out from the cooling medium flow line.

The invention also relates to a method for operating a cooling system according to above, the method comprising: operating the primary pump, the second pump and/or the flow regulation means so as to control a cooling medium pressure and/or mass/volume flow rate in the fuel cell cooling structure and to control a flow of cooling medium into the cooling medium flow line.

The invention also relates to a method for operating a fuel cell system of the above type, wherein the fuel cell system is provided with a cooling system according to above, the method comprising: feeding the first fuel component through the fuel supply line via the expander device and the first heat exchanger to the fuel cell assembly; operating the fuel cell assembly; operating the primary pump so as to provide a recirculating flow of cooling medium that passes through the fuel cell cooling structure; and operating the first pump so as to feed cooling medium from the first cooling medium buffer tank, and/or from an upstream part of the cooling medium flow line, towards and through the first heat exchanger and further towards the second cooling medium buffer tank.

The above are general method steps that normally are carried out when operating the fuel cell system.

In an embodiment of the method for operating the fuel cell system, wherein the flow regulation means is/are set in a mode that prevents flow of cooling medium between the primary cooling loop and the cooling medium flow line, and wherein the first cooling medium buffer tank is not empty and the second cooling medium buffer tank is not full, the method comprising: operating the first pump so as to feed cooling medium from the first cooling medium buffer tank through the first heat exchanger and further into the second cooling medium buffer tank so as to collect and increase an amount of stored cooled cooling medium in the second cooling medium buffer tank while reducing the amount of cooling medium stored in the first cooling medium buffer tank.

This step is used to build up the buffer of cooled cooling medium. This step can be performed more or less independently of the operation of the primary cooling loop and can be performed at all loads of the fuel cell assembly. Typically, it can be performed during low-load operation of the fuel cell assembly when there is no need for additional cooling by allowing flow of cooling medium between the primary cooling loop and the cooling medium flow line. Production of cooled cooling medium in the first heat exchanger increases with increasing load of the fuel cell assembly since the flow of the first fuel component increases with the load of the fuel cell assembly. Building up of cooled cooling medium buffer may thus be effected even when there is some flow of cooled cooling medium into the primary cooling loop during high load operation of the fuel cell assembly.

In an embodiment of the method for operating the fuel cell system, wherein the flow regulation means is/are set in a mode that allows flow of cooling medium between the primary cooling loop and the cooling medium flow line, the method comprising: operating the second pump so as to feed cooling medium from the second cooling medium buffer tank and/or from the first heat exchanger into the primary cooling loop via the outlet flow line part.

This step, combined with the general steps, relates to the high-load situation where additional extra-cool cooling medium is needed in the primary cooling loop and thus taken as some mix from the second cooling medium buffer tank (if not empty) and/or directly from the first heat exchanger by operating the first pump at a relatively high power level. It also relates to the situation at any load where the second cooling medium buffer tank is full (and the first buffer tank is empty) and some flow is needed from the primary cooling loop to the cooling medium flow line to operate the first pump and the first heat exchanger. When the fuel cell assembly operates at a lower load and the second cooling medium buffer tank is full, the flow of cooled cooling medium from the cooling medium flow line into the primary cooling loop can be used to allow the primary pump or a fan for generating a flow of air through the primary heat exchanger to operate at a lower power level in order to save energy and reduce costs. Whether the amount of cooling medium in the cooling buffer (i.e. in the second cooling medium buffer tank) increases or decreases depends primarily on the current pumping flow rate of the first and second pumps.

In a further embodiment of the method, wherein a temperature sensor is arranged to measure a representation of a temperature of the cooling medium in the cooling loop, the method comprises: starting operation of the second pump as a response to a signal from the temperature sensor that the temperature of the cooling medium in the cooling loop is above a threshold.

In a further embodiment of the method it comprises: adapting the flow of the first fuel component through the fuel supply line to the operation conditions of the fuel cell assembly; and operating the first pump in response to the flow of the first fuel component.

### BRIEF DESCRIPTION OF THE DRAWINGS

With reference to the appended drawings, below follows a more detailed description of embodiments of the invention cited as examples.

In the drawings:
Figure 1 shows, in a schematic view, an example of a fuel cell system provided with a cooling system which is not according to the claimed invention.
Figure 2 shows, in a schematic view, a first embodiment of a fuel cell system provided with a cooling system according to the invention.
Figure 3 shows, in a schematic view, a second embodiment of a fuel cell system provided with a cooling system according to the invention.
Figure 4 shows, in a schematic view, a third embodiment of a fuel cell system provided with a cooling system according to the invention.
Figure 5 shows, in a schematic view, a fourth embodiment of a fuel cell system provided with a cooling system according to the invention.

### DETAILED DESCRIPTION OF EXAMPLE EMBODIMENTS OF THE INVENTION

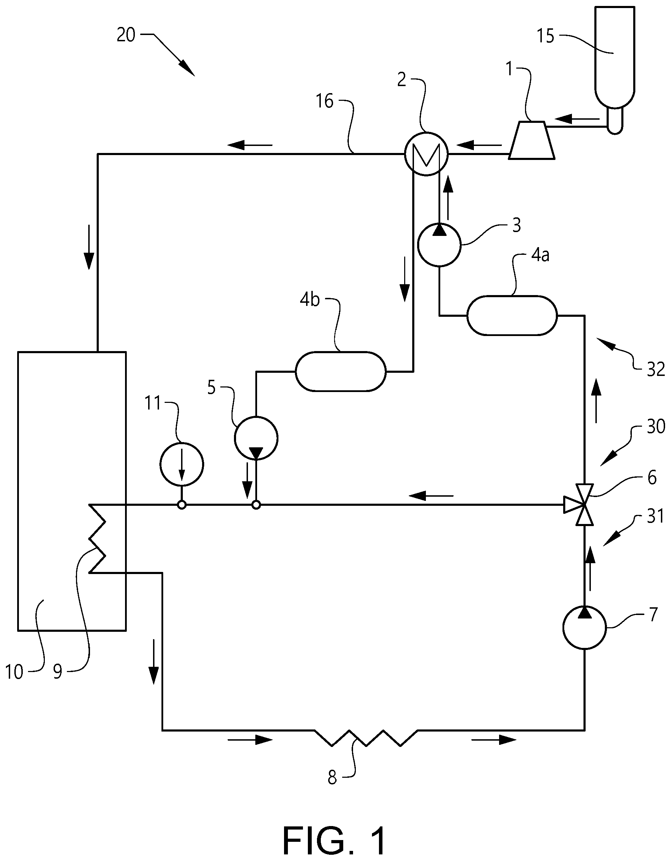

Figure 1 shows an example which is not according to the claimed invention of a fuel cell system 20 comprising a fuel cell assembly 10 provided with at least one fuel cell, typically 100-300 cells connected in series, configured to generate electricity by converting a fuel comprising at least a first fuel component, and a cooling system 30 configured for cooling of the fuel cell assembly 10. In this example the first fuel component is hydrogen, and a second fuel component is oxygen, which is fed to the fuel cell assembly 10 by a supply of air (not shown in figures).

The fuel cell system 20 further comprises a pressure tank 15 for pressurized storage of the first fuel component, an expander device 1 for reducing the pressure of the hydrogen contained in the pressure tank, and a fuel supply line 16 for feeding the hydrogen from the pressure tank 15 to the fuel cell assembly 10 via the expander device 1.

A first heat exchanger 2 is arranged for exchanging heat between a cooling medium and the hydrogen so as to simultaneously allow for cooling of the cooling medium and heating of the hydrogen by transferring heat from the cooling medium to the hydrogen when it has been cooled as a result of pressure reduction in the expander device 1.

The cooling system 30 comprises a primary cooling loop 31 for recirculation of a cooling medium, and a cooling medium flow line 32.

The cooling medium flow line 32 comprises a first cooling medium buffer tank 4a, the first heat exchanger 2 for cooling of the cooling medium, and a second cooling medium buffer tank 4b. The first cooling medium buffer tank 4a is arranged upstream the first heat exchanger 2 in the cooling medium flow line 32 so as to allow collection, storing and discharge of cooling medium before it reaches the first heat exchanger 2. The second cooling medium buffer tank 4b is arranged downstream of the first heat exchanger 2 so as to allow collection, storing and discharge of cooling medium that has passed through and been cooled in the first heat exchanger 2. In the example shown in figure 1 the first and second cooling medium buffer tanks 4a, 4b form separate tanks.

The cooling medium flow line 32 further comprises a first pump 3 configured to feed cooling medium from the first cooling medium buffer tank 4a, and/or from an upstream part of the cooling medium flow line 32, towards and through the first heat exchanger 2 and further towards the second cooling medium buffer tank 4b.

The cooling medium flow line 32 further comprises a second pump 5 configured to feed cooling medium from the second cooling medium buffer tank 4b, and/or to feed cooling medium from a downstream part of the cooling medium flow line 32, further downstream and out from the cooling medium flow line 32.

The cooling medium flow line 32 is connected to the primary cooling loop 31 via flow regulation means in the form of the second pump 5 and a controllable three-way valve 6 configured to control a flow of cooling medium between the primary cooling loop 31 and the cooling medium flow line 32.

The primary cooling loop 31 comprises a fuel cell cooling structure 9 arranged in association with the fuel cell assembly 10 so as to allow transfer of heat from the fuel cell assembly 10 to cooling medium flowing through the fuel cell cooling structure 9, a primary heat exchanger 8 for cooling of cooling medium that has been heated by the fuel cell assembly 10, and a primary pump 7 configured to recirculate cooling medium. The primary heat exchanger 8 may dissipate heat to ambient air.

The flow order in the primary cooling loop 31 is: primary pump 7 - fuel cell cooling structure 9 - primary heat exchanger 8 - and back to primary pump 7.

The cooling medium flow line 32 is connected, and fluidly connectable, to the primary cooling loop 31 between the primary pump 7 and the fuel cell cooling structure 9 with an inlet/upstream side connecting at a branching point where also the valve 6 is located and with an outlet/downstream side connecting between the inlet connection and the fuel cell cooling structure 9.

Cooling medium may thus be recirculated in the primary cooling loop 31 without involving the cooling medium flow line 32. At the same time, cooling medium may be fed by the first pump 3 from the first buffer tank 4a to the second buffer tank 4b while heating the fuel in the first heat exchanger 2. By controlling the second pump 5 and the valve 6, cooling medium may be recirculated through an enlarged cooling loop including the primary cooling loop 31 and the cooling medium flow line 32. While recirculating cooling medium in this enlarged loop, cooling medium may or may not be fed also directly from the valve 6 to the fuel cell cooling structure 9 depending on how the cooling system 30 is controlled, which in turn depends on the operation conditions of the fuel cell system 20.

A temperature sensor 11 arranged to measure a representation of a temperature of the cooling medium at an inlet to the fuel cell cooling structure 9.

The cooling system 30 comprises a control circuitry (not shown) configured to allow control of a cooling medium pressure and volume flow rate in the fuel cell cooling structure 9 and to allow control of a flow of cooling medium into the cooling medium flow line 32 by controlling the primary pump 7, the second pump 5 and/or the valve 6. Exactly how to control the flows depends on the particular application and the particular operation conditions.

The fuel cell system 20 shown in figure 1 is suitable for being arranged in a vehicle and form part of an electric driveline for propulsion of the vehicle.

A method for operating the cooling system 30 may comprise:
- collecting or discharging at a certain volume flow rate cooling medium in or from the first cooling medium buffer tank 4a while, in a compensating manner, discharging or collecting at the same volume flow rate cooling medium that has been cooled in the first heat exchanger 2 from or in the second cooling medium buffer tank 4b so that the total volume of cooling medium contained in the first and second cooling medium buffer tanks 4a, 4b remains the same.

A method for operating the cooling system 30 may comprise:
- operating the first pump 3 so as to feed cooling medium from the first cooling medium buffer tank 4a, and/or from an upstream part of the cooling medium flow line 32, towards and through the second heat exchanger 2 and further towards the second cooling medium buffer tank 4b.

A method for operating the cooling system 30 may comprise:
- operating the second pump 5 so as to feed cooling medium from the second cooling medium buffer tank 4b, and/or from a downstream part of the cooling medium flow line 32, further downstream and out from the cooling medium flow line 32.

A method for operating the cooling system 30 may comprise:
- operating the primary pump 7, the second pump 5 and/or the valve 6 so as to control a cooling medium pressure and/or volume flow rate in the fuel cell cooling structure 9 and to control a flow of cooling medium into the cooling medium flow line 32.

A method for operating the fuel cell system 20 may comprise:
- feeding the first fuel component through the fuel supply line 16 via the expander device 1 and the first heat exchanger 2 to the fuel assembly 10;
- operating the fuel cell assembly 10;
- operating the primary pump 7 so as to provide a recirculating flow of cooling medium that passes through the fuel cell cooling structure 9; and
- operating the first pump 3 so as to feed cooling medium from the first cooling medium buffer tank 4a, and/or from an upstream part of the cooling medium flow line 32, towards and through the second heat exchanger 2 and further towards the second cooling medium buffer tank 4b.

The method for operating the fuel cell system 20 may, when the second pump 5 and the valve 6 is/are set in a mode that prevents flow of cooling medium between the primary cooling loop 31 and the cooling medium flow line 32 and when the first cooling medium buffer tank 4a is not empty and the second cooling medium buffer tank 4b is not full, further comprise:
- operating the second pump 3 so as to feed cooling medium from the first cooling medium buffer tank 4a through the first heat exchanger 2 and further into the second cooling medium buffer tank 4b so as to collect and increase an amount of stored cooled cooling medium in the second cooling medium buffer tank 4b while reducing the amount of cooling medium stored in the first cooling medium buffer tank 4a.

The method for operating the fuel cell system 20 may, when the second pump 5 and the valve 6 is/are set in a mode that allows flow of cooling medium between the primary cooling loop 31 and the cooling medium flow line 32, further comprise:
- operating the second pump 5 so as to feed cooling medium from the second cooling medium buffer tank 4b and/or from the first heat exchanger 2 into the primary cooling loop 31 via the outlet flow line part.

The method for operating the fuel cell system 20 may further comprise:
- starting operation of the second pump 5 as a response to a signal from the temperature sensor 11 that the temperature of the cooling medium in the cooling loop 31 is above a threshold.

The method for operating the fuel cell system 20 may further comprise:
- adapting the flow of the first fuel component through the fuel supply line 16 to the operation conditions of the fuel cell assembly 10; and
- operating the first pump 3 in response to the flow of the first fuel component.

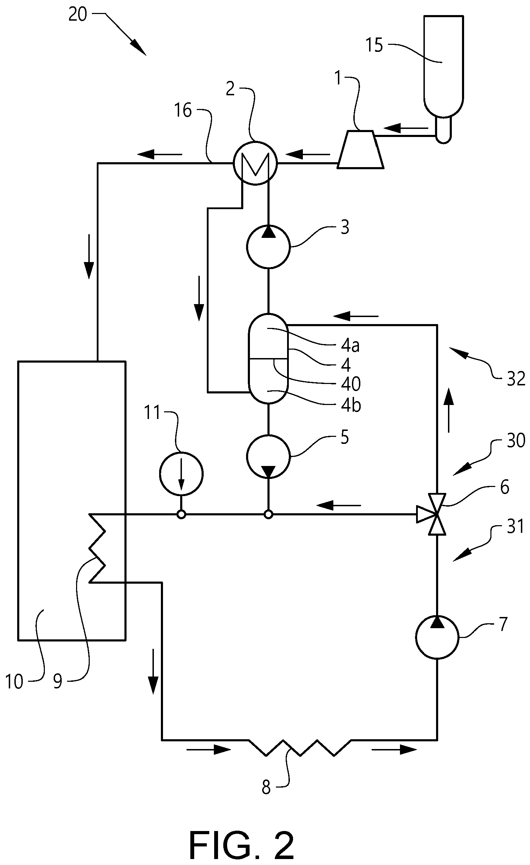

Figure 2 shows a first embodiment of the fuel cell system 20, which is similar to the example of figure 1. The same reference signs are used for the same principal components. The only difference is that in this case, and this according to the invention, the first and second cooling medium buffer tanks 4a, 4b are arranged in a common tank 4 provided with a movable and insulated separator 40 that separates the first cooling medium buffer tank 4a from the second cooling medium buffer tank 4b. As an example, when cooling medium is collected in the second buffer tank 4b, the separator moves towards the first buffer tank 4a (i.e. upwards in figure 2) so that the volume of the second buffer tank 4b increases while cooling medium is discharged from the first buffer tank 4a as its volume decreases at a rate corresponding to the increase of the volume of the second buffer tank 4b. An advantage of this arrangement compared to the first example is that one common tank (that always is full) requires less space than two separate tanks and thus further reduces the space requirements. As mentioned previously, it is of particular importance for vehicle-based cooling or fuel cell systems to limit the space requirements.

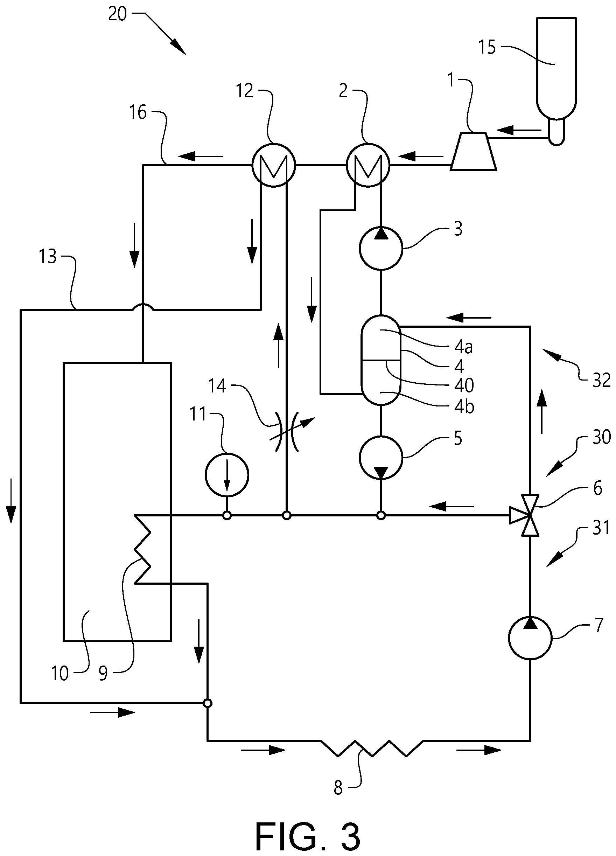

Figure 3 shows a second embodiment of the fuel cell system 20 where the fuel cell system 20 comprises an additional heat exchanger 12 arranged for exchanging heat between the cooling medium and the first fuel component in a way corresponding to that of the first heat exchanger 2. The additional heat exchanger 12 is arranged downstream of the first heat exchanger 2 in relation to the fuel supply line 16. This provides for additional heating of the first fuel component and additional cooling of the cooling medium.

As shown in figure 3, first and second cooling medium channels leading to and from the additional heat exchanger 12 are connected to the primary cooling loop 31 upstream of the fuel cell cooling structure 9 (between the temperature sensor 11 and the outlet of the cooling medium flow line 32) and downstream of the fuel cell cooling structure 9 (upstream of the primary heat exchanger 8), respectively.

A controllable valve 14 is arranged on, in this case, the first cooling medium channel leading to the additional heat exchanger 12 for controlling the flow of cooling medium to the additional heat exchanger 12.

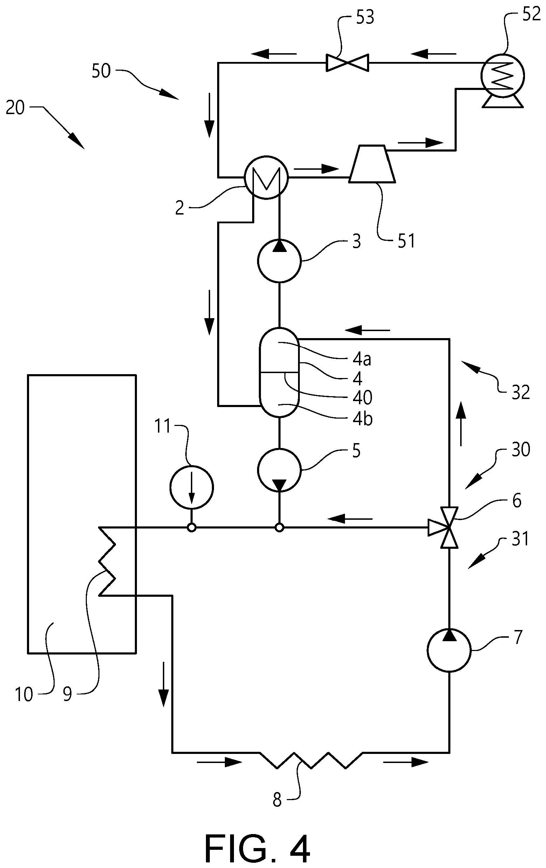

Figure 4 shows a third embodiment of the fuel cell system 20 where the first heat exchanger 2 cools the cooling medium as described above but where the medium heated in the first heat exchanger 2 no longer is a fuel for the fuel cell assembly 10 but a medium allowed to recirculate in a heat pump system 50, for instance (a part of) an air conditioning system. Besides the heat exchanger 2, which works as an evaporator for the medium in the heat pump system 50, the heat pump system 50 comprises a compressor 51, a condenser 52, and an expansion valve 53.

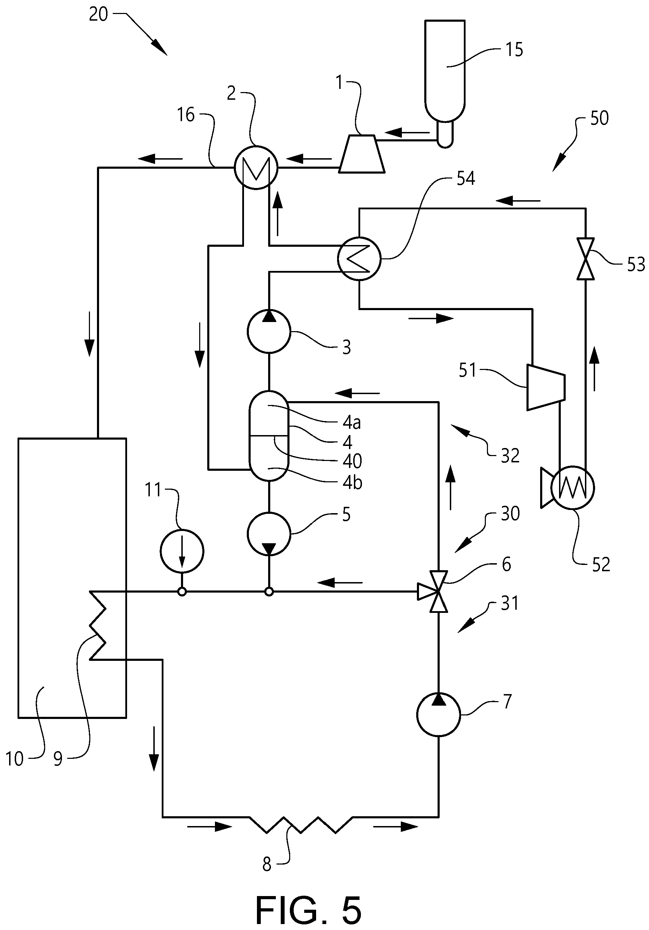

Figure 5 shows a fourth embodiment of the fuel cell system 20 where the system in general is outlined according to the first embodiment shown in figure 2 but where a heat pump system 50 similar to the one shown in figure 4 has been included for additional cooling of the cooling medium in the cooling medium flow line 32 at a point between the first pump 3 and the first heat exchanger 2. In similarity with figure 2, the cooling medium is cooled by the expanded first fuel component in the first heat exchanger 2. The heat pump system 50 comprises the same components as in figure 4, i.e. a compressor 51, a condenser 52, an expansion valve 53, and an evaporator 54. The evaporator 54 thus forms a further heat exchanger where the cooling medium is pre-cooled before reaching the first heat exchanger 2 and where the medium recirculating in the heat pump system 50 is heated before it reaches the compressor 52.

The fourth embodiment provides for a very efficient system, in particular if the heat dissipated in the condenser 52 is taken care of in an efficient manner.

The fuel cell system 20 of figure 5 may further be provided with, for instance, an additional heat exchanger 12 as shown in figure 3.

It is to be understood that the present invention is not limited to the embodiments described above and illustrated in the drawings; rather, the skilled person will recognize that many changes and modifications may be made within the scope of the appended claims.

For instance, although a very efficient solution for a fuel cell system of the type discussed here, it is not necessary, as shown in figure 4, that the first heat exchanger 2 makes use of a flow of cold fuel to cool the cooling medium; another heat exchanger arrangement is possible.

Further, the principle of the cooling system may be used to cool another component than a fuel cell assembly.

Further, a relief valve may be used instead of, or as a complement to, the controllable three-way valve 6. Such a relief valve does not necessarily have to be positioned where the cooling system branches but can be positioned in the cooling medium flow line 32 at some distance from the branching point.

## Claims

1. Cooling system (30) for cooling of a fuel cell assembly (10),
wherein the cooling system (30) comprises:
- a cooling loop (31) for recirculation of a cooling medium,
- a cooling medium flow line (32) comprising a first cooling medium buffer tank (4a), a first heat exchanger (2) for cooling of the cooling medium, and a second cooling medium buffer tank (4b),
wherein the first cooling medium buffer tank (4a) is arranged upstream the first heat exchanger (2) so as to allow collection, storing and discharge of cooling medium before it reaches the first heat exchanger (2), and
wherein the second cooling medium buffer tank (4b) is arranged downstream of the first heat exchanger (2) so as to allow collection, storing and discharge of cooling medium that has passed through and been cooled in the first heat exchanger (2)
**characterized in**
**that** the first and second cooling medium buffer tanks (4a, 4b) are arranged in a common tank (4), wherein the common tank is provided with a movable separator (40) that separates the first cooling medium buffer tank (4a) from the second cooling medium buffer tank (4b).

2. Cooling system (30) according to claim 1, wherein the cooling medium flow line (32) further comprises a first pump (3) configured to feed cooling medium from the first cooling medium buffer tank (4a), and/or from an upstream part of the cooling medium flow line (32), towards and through the first heat exchanger (2) and further towards the second cooling medium buffer tank (4b).

3. Cooling system (30) according to any of the above claims, wherein the cooling medium flow line (32) further comprises a second pump (5) configured to feed cooling medium from the second cooling medium buffer tank (4b), and/or from a downstream part of the cooling medium flow line (32), further downstream and out from the cooling medium flow line (32).

4. Cooling system (30) according to any of the above claims, wherein the cooling system (30) comprises a primary cooling loop (31) and wherein the cooling medium flow line (32) is connected to the primary cooling loop (31) via flow regulation means (5, 6) configured to control a flow of cooling medium between the primary cooling loop (31) and the cooling medium flow line (32).

5. Cooling system (30) according to claim 4, wherein the primary cooling loop (31) comprises:
- a fuel cell cooling structure (9) arranged in association with the fuel cell assembly (10) so as to allow transfer of heat from the fuel cell assembly (10) to cooling medium flowing through the fuel cell cooling structure (9);
- a primary heat exchanger (8) for cooling of cooling medium that has been heated by the fuel cell assembly (10); and
- a primary pump (7) configured to recirculate cooling medium.

6. Cooling system (30) according to any of the above claims, wherein the cooling system (30) comprises a temperature sensor (11) arranged to measure a representation of a temperature of the cooling medium in the cooling loop (31).

7. Cooling system (30) according to claims 4 and 5, wherein a downstream part of the cooling medium flow line (32) is arranged to connect to the primary cooling loop (31) between the primary pump (7) and the fuel cell cooling structure (9).

8. Cooling system (30) according to claims 3-5, wherein the cooling system (30) is configured to allow control of a cooling medium pressure, and/or a mass/volume flow rate, in the fuel cell cooling structure (9) and allow control of a flow of cooling medium into the cooling medium flow line (32) by controlling the primary pump (7), the second pump (5) and/or the flow regulation means (6).

9. Fuel cell system (20) comprising:
- a fuel cell assembly (10) provided with at least one fuel cell configured to generate electricity by converting a fuel comprising at least a first fuel component; and
- a cooling system (30) configured for cooling of the fuel cell assembly (10),
wherein the cooling system (30) is arranged according to any of the above claims.

10. Fuel cell system (20) according to claim 9, further comprising:
- a pressure tank (15) for pressurized storage of the first fuel component;
- an expander device (1) for reducing the pressure of the first fuel component contained in the pressure tank;
- a fuel supply line (16) for feeding the first fuel component from the pressure tank to the fuel cell assembly (10) via the expander device (1),
wherein the first heat exchanger (2) is arranged for exchanging heat between the cooling medium and the first fuel component so as to allow cooling of the cooling medium and heating of the first fuel component by transferring heat from the cooling medium to the first fuel component when the first fuel component has been cooled as a result of pressure reduction in the expander device (1).

11. Fuel cell system (20) according to claim 10, wherein the fuel cell system (20) comprises an additional heat exchanger (12) arranged for exchanging heat between the cooling medium and the first fuel component in a way corresponding to that of the first heat exchanger (2), wherein the additional heat exchanger (12) is arranged downstream of the first heat exchanger (2) in relation to the fuel supply line (16).

12. Fuel cell system (20) according to claim 11, wherein the fuel cell system (20) comprises a cooling system (30) according to claim 4 and wherein first and second cooling medium channels leading to and from the additional heat exchanger (12) are connected to the primary cooling loop (31).

13. Fuel cell system (20) according to any of claims 10-12, wherein the fuel cell system (20) is provided with a heat pump system (50) comprising a compressor (51), a condenser (52), an expansion valve (53), and an evaporator (54) configured to compress, condense, expand and evaporate, respectively, a medium recirculating in the heat pump system (50), wherein the evaporator (54) forms a further heat exchanger configured to transfer heat from the cooling medium to the medium recirculating in the heat pump system (50), and wherein the evaporator (54) is arranged between the first pump (3) and the first heat exchanger (2) so as to pre-cool the cooling medium in the cooling medium flow line (32) before it reaches the first heat exchanger (2).

14. A vehicle provided with an electric driveline for propulsion of the vehicle, wherein the electric driveline comprises a fuel cell system (20) according to any of claims 9-13.

15. Method for operating a cooling system (30) according to any of claims 1-8, the method comprising:
- collecting or discharging at a certain volume flow rate cooling medium in or from the first cooling medium buffer tank (4a) while, in a compensating manner, discharging or collecting at the same volume flow rate cooling medium that has been cooled in the first heat exchanger (2) from or in the second cooling medium buffer tank (4b) so that the total volume of cooling medium contained in the first and second cooling medium buffer tanks (4a, 4b) remains the same.

16. Method for operating a cooling system (30) according to claim 2, the method comprising:
- operating the first pump (3) so as to feed cooling medium from the first cooling medium buffer tank (4a), and/or from an upstream part of the cooling medium flow line (32), towards and through the second heat exchanger (2) and further towards the second cooling medium buffer tank (4b).

17. Method for operating a cooling system (30) according to claim 3, the method comprising:
- operating the second pump (5) so as to feed cooling medium from the second cooling medium buffer tank (4b), and/or from a downstream part of the cooling medium flow line (32), further downstream and out from the cooling medium flow line (32).

18. Method for operating a fuel cell system (20) according to any of claims 10-13, wherein the fuel cell system (20) is provided with a cooling system (30) according to claims 3-5, the method comprising:
- feeding the first fuel component through the fuel supply line via the expander device (1) and the first heat exchanger (2) to the fuel assembly (10);
- operating the fuel cell assembly (10);
- operating the primary pump (7) so as to provide a recirculating flow of cooling medium that passes through the fuel cell cooling structure (9); and
- operating the first pump (3) so as to feed cooling medium from the first cooling medium buffer tank (4a), and/or from an upstream part of the cooling medium flow line (32), towards and through the first heat exchanger (2) and further towards the second cooling medium buffer tank (4b).

19. Method according to claim 18, wherein the flow regulation means (5, 6) is/are set in a mode that prevents flow of cooling medium between the primary cooling loop (31) and the cooling medium flow line (32), and wherein the first cooling medium buffer tank (4a) is not empty and the second cooling medium buffer tank (4b) is not full, the method comprising:
- operating the first pump (3) so as to feed cooling medium from the first cooling medium buffer tank (4a) through the first heat exchanger (2) and further into the second cooling medium buffer tank (4b) so as to collect and increase an amount of stored cooled cooling medium in the second cooling medium buffer tank (4b) while reducing the amount of cooling medium stored in the first cooling medium buffer tank (4a).

20. Method according to claim 18, wherein the flow regulation means (5, 6) is/are set in a mode that allows flow of cooling medium between the primary cooling loop (31) and the cooling medium flow line (32), the method comprising:
- operating the second pump (5) so as to feed cooling medium from the second cooling medium buffer tank (4b) and/or from the first heat exchanger (2) into the primary cooling loop (31) via the outlet flow line part.

## Patentansprüche

1. Kühlsystem (30) zur Kühlung einer Brennstoffzellenbaugruppe (10),
wobei das Kühlsystem (30) umfasst:
- einen Kühlkreislauf (31) zur Umwälzung eines Kühlmittels,
- eine Kühlmitteldurchflussleitung (32), die einen ersten Kühlmittelpufferbehälter (4a), einen ersten Wärmetauscher (2) zur Kühlung des Kühlmittels und einen zweiten Kühlmittelpufferbehälter (4b) umfasst,
wobei der erste Kühlmittelpufferbehälter (4a) stromaufwärts des ersten Wärmetauschers (2) angeordnet ist, um das Sammeln, Lagern und Ablassen von Kühlmittel zu ermöglichen, bevor es den ersten Wärmetauscher (2) erreicht, und
wobei der zweite Kühlmittelpufferbehälter (4b) stromabwärts des ersten Wärmetauschers (2) angeordnet ist, um das Sammeln, Lagern und Ablassen des Kühlmittels zu ermöglichen, das durch den ersten Wärmetauscher (2) geströmt ist und gekühlt wurde, **dadurch gekennzeichnet**
**dass** der erste und der zweite Kühlmittelpufferbehälter (4a, 4b) in einem gemeinsamen Behälter (4) angeordnet sind, wobei der gemeinsame Behälter mit einem beweglichen Trennelement (40) versehen ist, das den ersten Kühlmittelpufferbehälter (4a) vom zweiten Kühlmittelpufferbehälter (4b) trennt.

2. Kühlsystem (30) nach Anspruch 1, wobei die Kühlmitteldurchflussleitung (32) ferner eine erste Pumpe (3) aufweist, die so konfiguriert ist, dass sie Kühlmittel aus dem ersten Kühlmittelpufferbehälter (4a) und/oder aus einem vorgeschalteten Teil der Kühlmitteldurchflussleitung (32) hin zum und durch den ersten Wärmetauscher (2) und weiter hin zum zweiten Kühlmittelpufferbehälter (4b) speist.

3. Kühlsystem (30) nach einem der vorstehenden Ansprüche, wobei die Kühlmitteldurchflussleitung (32) ferner eine zweite Pumpe (5) umfasst, die so konfiguriert ist, dass sie Kühlmittel aus dem zweiten Kühlmittelpufferbehälter (4b) und/oder aus einem nachgeschalteten Teil der Kühlmitteldurchflussleitung (32) weiter stromabwärts und aus der Kühlmitteldurchflussleitung (32) speist.

4. Kühlsystem (30) nach einem der vorstehenden Ansprüche, wobei das Kühlsystem (30) einen primären Kühlkreislauf (31) umfasst und wobei die Kühlmitteldurchflussleitung (32) mit dem primären Kühlkreislauf (31) über Durchflussregelungsmittel (5, 6) verbunden ist, die konfiguriert sind, einen Kühlmittelfluss zwischen dem primären Kühlkreislauf (31) und der Kühlmitteldurchflussleitung (32) zu steuern.

5. Kühlsystem (30) nach Anspruch 4, wobei der primäre Kühlkreislauf (31) umfasst:
- eine Brennstoffzellenkühleinrichtung (9), die in Verbindung mit der Brennstoffzellenbaugruppe (10) ausgelegt ist, um die Wärmeübertragung von der Brennstoffzellenbaugruppe (10) auf das Kühlmittel zu ermöglichen, das durch die Brennstoffzellenkühleinrichtung (9) fließt;
- einen primären Wärmetauscher (8) zur Kühlung des von der Brennstoffzellenbaugruppe (10) erwärmten Kühlmittels; und
- eine Primärpumpe (7), die für die Umwälzung des Kühlmittels konfiguriert ist.

6. Kühlsystem (30) nach einem der vorstehenden Ansprüche, wobei das Kühlsystem (30) einen Temperatursensor (11) umfasst, der ausgelegt ist, um eine Darstellung einer Temperatur des Kühlmittels im Kühlkreislauf (31) zu messen.

7. Kühlsystem (30) nach den Ansprüchen 4 und 5, wobei ein nachgeschalteter Teil der Kühlmitteldurchflussleitung (32) ausgelegt ist, um sich mit dem primären Kühlkreislauf (31) zwischen der Primärpumpe (7) und der Brennstoffzellenkühleinrichtung (9) zu verbinden.

8. Kühlsystem (30) nach den Ansprüchen 3 bis 5, wobei das Kühlsystem (30) so konfiguriert ist, dass es die Steuerung eines Kühlmitteldrucks und/oder einer Masse-/Volumendurchflussrate in der Brennstoffzellenkühleinrichtung (9) ermöglicht und die Steuerung eines Kühlmedienflusses in die Kühlmitteldurchflussleitung (32) durch Steuerung der Primärpumpe (7), der zweiten Pumpe (5) und/oder der Durchflussregelungsmittel (6) ermöglicht.

9. Brennstoffzellensystem (20), das umfasst:
- eine Brennstoffzellenbaugruppe (10), die mit mindestens einer Brennstoffzelle versehen ist, die so konfiguriert ist, dass sie durch Umwandlung eines Brennstoffs, der mindestens eine erste Brennstoffkomponente umfasst, Elektrizität erzeugt; und
- ein Kühlsystem (30), das zur Kühlung der Brennstoffzellenbaugruppe (10) konfiguriert ist, wobei das Kühlsystem (30) nach einem der vorstehenden Ansprüche ausgelegt ist.

10. Brennstoffzellensystem (20) nach Anspruch 9, das ferner umfasst:
- einen Druckbehälter (15) zur druckbeaufschlagten Lagerung der ersten Brennstoffkomponente;
- eine Expandervorrichtung (1) zur Reduzierung des Drucks der ersten Brennstoffkomponente, die im ersten Druckbehälter enthalten ist;
- eine Brennstoffzuleitung (16) zur Speisung der ersten Brennstoffkomponente vom Druckbehälter zur Brennstoffzellenbaugruppe (10) über die Expandervorrichtung (1),
wobei der erste Wärmetauscher (2) zum Wärmetauschen zwischen dem Kühlmittel und der ersten Brennstoffkomponente ausgelegt ist, um eine Kühlung des Kühlmittels und eine Erwärmung der ersten Brennstoffkomponente durch Übertragung von Wärme vom Kühlmittel auf die erste Brennstoffkomponente zu ermöglichen, wenn die erste Brennstoffkomponente infolge einer Druckreduzierung in der Expandervorrichtung (1) abgekühlt wurde.

11. Brennstoffzellensystem (20) nach Anspruch 10, wobei das Brennstoffzellensystem (20) einen zusätzlichen Wärmetauscher (12) umfasst, der zum Wärmetauschen zwischen dem Kühlmittel und der ersten Brennstoffkomponente in einer Weise ausgelegt ist, die jener des ersten Wärmetauschers (2) entspricht, wobei der zusätzliche Wärmetauscher (12) dem ersten Wärmetauscher (2) relativ zu der Brennstoffzuleitung (16) nachgeschaltet ist.

12. Brennstoffzellensystem (20) nach Anspruch 11, wobei das Brennstoffzellensystem (20) ein Kühlsystem (30) nach Anspruch 4 umfasst und wobei erste und zweite Kühlmittelkanäle, die zu und von dem zusätzlichen Wärmetauscher (12) führen, mit dem primären Kühlkreislauf (31) verbunden sind.

13. Brennstoffzellensystem (20) nach einem der Ansprüche 10 bis 12, wobei das Brennstoffzellensystem (20) mit einem Wärmepumpensystem (50) versehen ist, das einen Kompressor (51), einen Kondensator (52), ein Expansionsventil (53) und einen Verdampfer (54) umfasst, die jeweils so ausgelegt sind, dass sie ein im Wärmepumpensystem (50) umgewälztes Mittel verdichten, verflüssigen, entspannen und verdampfen, wobei der Verdampfer (54) einen weiteren Wärmetauscher bildet, der zum Übertragen von Wärme vom Kühlmittel auf das im Wärmepumpensystem (50) umgewälzte Mittel ausgelegt ist, und wobei der Verdampfer (54) zwischen der ersten Pumpe (3) und dem ersten Wärmetauscher (2) angeordnet ist, um das Kühlmittel in der Kühlmitteldurchlflussleitung (32) vorzukühlen, bevor es den ersten Wärmetauscher (2) erreicht.

14. Fahrzeug, das mit einem elektrischen Antriebsstrang zum Antrieb des Fahrzeugs versehen ist, wobei der elektrische Antriebsstrang ein Brennstoffzellensystem (20) nach einem der Ansprüche 9 bis 13 umfasst.

15. Verfahren zum Betreiben eines Kühlsystems (30) nach einem der Ansprüche 1 bis 8, wobei das Verfahren umfasst:
- Sammeln oder Ablassen eines Kühlmittels mit einer bestimmten Volumendurchflussrate in oder aus dem ersten Kühlmittelpufferbehälter (4a), während das Kühlmittel, das im ersten Wärmetauscher (2) aus oder in dem zweiten Kühlmittelpufferbehälter (4b) gekühlt wurde, bei der gleichen Volumendurchflussrate kompensierend abgelassen oder gesammelt wird, so dass das Gesamtvolumen an Kühlmittel, das in dem ersten und dem zweiten Kühlmittelpufferbehälter (4a, 4b) enthalten ist, gleich bleibt.

16. Verfahren zum Betreiben eines Kühlsystems (30) nach Anspruch 2, wobei das Verfahren umfasst:
- Betreiben der ersten Pumpe (3), um Kühlmittel aus dem ersten Kühlmittelpufferbehälter (4a) und/oder aus einem vorgeschalteten Teil der Kühlmitteldurchflussleitung (32) hin zum und durch den zweiten Wärmetauscher (2) und weiter hin zum zweiten Kühlmittelpufferbehälter (4b) zu speisen.

17. Verfahren zum Betreiben eines Kühlsystems (30) nach Anspruch 3, wobei das Verfahren umfasst:
- Betreiben der zweiten Pumpe (5), um Kühlmittel aus dem zweiten Kühlmittelpufferbehälter (4b) und/oder aus einem nachgeschalteten Teil der Kühlmitteldurchflussleitung (32) weiter stromabwärts und aus der Kühlmitteldurchflussleitung (32) zu speisen.

18. Verfahren zum Betreiben eines Brennstoffzellensystems (20) nach einem der Ansprüche 10 bis 13, wobei das Brennstoffzellensystem (20) mit einem Kühlsystem (30) nach Anspruch 3 bis 5 versehen ist, wobei das Verfahren umfasst:
- Speisen der ersten Brennstoffkomponente durch die Brennstoffzuleitung über die Expandervorrichtung (1) und den ersten Wärmetauscher (2) zu der Brennstoffbaugruppe (10);
- Betreiben der Brennstoffzellenbaugruppe (10);
- Betreiben der Primärpumpe (7), so dass ein Umwälzungsfluss des Kühlmittels bereitgestellt wird, der durch die Brennstoffzellenkühleinrichtung (9) strömt; und
- - Betreiben der ersten Pumpe (3), um Kühlmittel aus dem ersten Kühlmittelpufferbehälter (4a) und/oder aus einem vorgeschalteten Teil der Kühlmitteldurchflussleitung (32) hin zum und durch den ersten Wärmetauscher (2) und weiter hin zum zweiten Kühlmittelpufferbehälter (4b) zu speisen.

19. Verfahren nach Anspruch 18, wobei die Durchflussregelungsmittel (5, 6) in einen Modus eingestellt sind, der den Durchfluss von Kühlmittel zwischen dem primären Kühlkreislauf (31) und der Kühlmitteldurchflussleitung (32) verhindert, und wobei der erste Kühlmittelpufferbehälter (4a) nicht leer ist und der zweite Kühlmittelpufferbehälter (4b) nicht voll ist, wobei das Verfahren umfasst:
- Betreiben der ersten Pumpe (3), um das Kühlmittel aus dem ersten Kühlmittelpufferbehälter (4a) durch den ersten Wärmetauscher (2) und weiter in den zweiten Kühlmittelpufferbehälter (4b) zu leiten, um eine Menge an gelagertem gekühltem Kühlmittel im zweiten Kühlmittelpufferbehälter (4b) zu sammeln und zu erhöhen, während die Menge des im ersten Kühlmittelpufferbehälter (4a) gelagerten Kühlmittels reduziert wird.

20. Verfahren nach Anspruch 18, wobei die Durchflussregelungsmittel (5, 6) in einem Modus eingestellt sind, der den Durchfluss des Kühlmittels zwischen dem primären Kühlkreislauf (31) und der Kühlmitteldurchflussleitung (32) ermöglicht, wobei das Verfahren umfasst:
- - Betreiben der zweiten Pumpe (5), um das Kühlmittel aus dem zweiten Kühlmittelpufferbehälter (4b) und/oder aus dem ersten Wärmetauscher (2) über einen Teil der Auslassdurchflussleitung in den primären Kühlkreislauf (31) zu speisen.

## Revendications

1. Système de refroidissement (30) pour le refroidissement d'un ensemble de piles à combustible (10),
dans lequel le système de refroidissement (30) comprend :
- une boucle de refroidissement (31) pour la recirculation d'un milieu de refroidissement,
- une conduite d'écoulement de milieu de refroidissement (32) comprenant un premier réservoir tampon de milieu de refroidissement (4a), un premier échangeur de chaleur (2) pour le refroidissement du milieu de refroidissement et un second réservoir tampon de milieu de refroidissement (4b),
dans lequel le premier réservoir tampon de milieu de refroidissement (4a) est agencé en amont du premier échangeur de chaleur (2) de manière à permettre la collecte, le stockage et l'évacuation du milieu de refroidissement avant qu'il n'atteigne le premier échangeur de chaleur (2), et
dans lequel le second réservoir tampon de milieu de refroidissement (4b) est agencé en aval du premier échangeur de chaleur (2) de manière à permettre la collecte, le stockage et l'évacuation du milieu de refroidissement qui a traversé et a été refroidi dans le premier échangeur de chaleur (2) **caractérisé en ce que**
les premier et second réservoirs tampons de milieu de refroidissement (4a, 4b) sont agencés dans un réservoir commun (4), le réservoir commun étant pourvu d'un séparateur mobile (40) qui sépare le premier réservoir tampon de milieu de refroidissement (4a) du second réservoir tampon de milieu de refroidissement (4b).

2. Système de refroidissement (30) selon la revendication 1, dans lequel la conduite d'écoulement de milieu de refroidissement (32) comprend en outre une première pompe (3) configurée pour alimenter le milieu de refroidissement à partir du premier réservoir tampon de milieu de refroidissement (4a), et/ou à partir d'une partie amont de la conduite d'écoulement de milieu de refroidissement (32), vers et à travers le premier échangeur de chaleur (2) et en outre vers le second réservoir tampon de milieu de refroidissement (4b).

3. Système de refroidissement (30) selon l'une quelconque des revendications précédentes, dans lequel la conduite d'écoulement de milieu de refroidissement (32) comprend en outre une seconde pompe (5) configurée pour alimenter le milieu de refroidissement à partir du second réservoir tampon de milieu de refroidissement (4b), et/ou à partir d'une partie en aval de la conduite d'écoulement de milieu de refroidissement (32), davantage en aval et hors de la conduite d'écoulement de milieu de refroidissement (32).

4. Système de refroidissement (30) selon l'une quelconque des revendications précédentes, dans lequel le système de refroidissement (30) comprend une boucle de refroidissement primaire (31) et dans lequel la conduite d'écoulement de milieu de refroidissement (32) est connectée à la boucle de refroidissement primaire (31) via des moyens de régulation de débit (5, 6) configurés pour contrôler un débit de milieu de refroidissement entre la boucle de refroidissement primaire (31) et la conduite d'écoulement de milieu de refroidissement (32).

5. Système de refroidissement (30) selon la revendication 4, dans lequel la boucle de refroidissement primaire (31) comprend :
- une structure de refroidissement de pile à combustible (9) agencée en association avec l'ensemble de piles à combustible (10) de manière à permettre le transfert de chaleur de l'ensemble de piles à combustible (10) au milieu de refroidissement circulant à travers la structure de refroidissement de pile à combustible (9) ;
- un échangeur de chaleur primaire (8) pour refroidir le milieu de refroidissement qui a été chauffé par l'ensemble de pile à combustible (10) ; et
- une pompe primaire (7) configurée pour faire recirculer le milieu de refroidissement.

6. Système de refroidissement (30) selon l'une quelconque des revendications précédentes, dans lequel le système de refroidissement (30) comprend un capteur de température (11) agencé pour mesurer une représentation d'une température du milieu de refroidissement dans la boucle de refroidissement (31).

7. Système de refroidissement (30) selon les revendications 4 et 5, dans lequel une partie aval de la conduite d'écoulement de milieu de refroidissement (32) est agencée pour se connecter à la boucle de refroidissement primaire (31) entre la pompe primaire (7) et la structure de refroidissement de pile à combustible (9).

8. Système de refroidissement (30) selon les revendications 3 à 5, dans lequel le système de refroidissement (30) est configuré pour permettre le contrôle d'une pression de milieu de refroidissement et/ou d'un débit massique/volumique dans la structure de refroidissement de pile à combustible (9) et permettre le contrôle d'un débit de milieu de refroidissement dans la conduite d'écoulement de milieu de refroidissement (32) en contrôlant la pompe primaire (7), la seconde pompe (5) et/ou les moyens de régulation de débit (6).

9. Système de pile à combustible (20) comprenant :
- un ensemble de piles à combustible (10) pourvu d'au moins une pile à combustible configurée pour générer de l'électricité en convertissant un combustible comprenant au moins un premier composant combustible ; et
- un système de refroidissement (30) configuré pour refroidir l'ensemble de piles à combustible (10), le système de refroidissement (30) étant agencé selon l'une quelconque des revendications précédentes.

10. Système de pile à combustible (20) selon la revendication 9, comprenant en outre :
- un réservoir sous pression (15) pour le stockage sous pression du premier composant de combustible ;
- un dispositif d'expansion (1) pour réduire la pression du premier composant de combustible contenu dans le réservoir sous pression ;
- une conduite d'alimentation en combustible (16) pour alimenter le premier composant de combustible du réservoir sous pression à l'ensemble de pile à combustible (10) via le dispositif d'expansion (1),
dans lequel le premier échangeur de chaleur (2) est agencé pour échanger de la chaleur entre le milieu de refroidissement et le premier composant de combustible de manière à permettre le refroidissement du milieu de refroidissement et le chauffage du premier composant de combustible en transférant la chaleur du milieu de refroidissement au premier composant de combustible lorsque le premier composant de combustible a été refroidi en raison d'une réduction de pression dans le dispositif d'expansion (1).

11. Système de pile à combustible (20) selon la revendication 10, dans lequel le système de pile à combustible (20) comprend un échangeur de chaleur supplémentaire (12) agencé pour échanger de la chaleur entre le milieu de refroidissement et le premier composant de combustible d'une manière correspondant à celle du premier échangeur de chaleur (2), dans lequel l'échangeur de chaleur supplémentaire (12) est agencé en aval du premier échangeur de chaleur (2) par rapport à la conduite d'alimentation en combustible (16).

12. Système de pile à combustible (20) selon la revendication 11, dans lequel le système de pile à combustible (20) comprend un système de refroidissement (30) selon la revendication 4 et dans lequel des premier et second canaux de milieu de refroidissement menant vers et depuis l'échangeur de chaleur supplémentaire (12) sont connectés à la boucle de refroidissement primaire (31).

13. Système de pile à combustible (20) selon l'une quelconque des revendications 10 à 12, dans lequel le système de pile à combustible (20) est pourvu d'un système de pompe à chaleur (50) comprenant un compresseur (51), un condenseur (52), un détendeur (53) et un évaporateur (54) configurés pour comprimer, condenser, dilater et évaporer, respectivement, un milieu recirculant dans le système de pompe à chaleur (50), dans lequel l'évaporateur (54) forme un autre échangeur de chaleur configuré pour transférer la chaleur du milieu de refroidissement au milieu recirculant dans le système de pompe à chaleur (50), et dans lequel l'évaporateur (54) est agencé entre la première pompe (3) et le premier échangeur de chaleur (2) de manière à pré-refroidir le milieu de refroidissement dans la conduite d'écoulement de milieu de refroidissement (32) avant qu'il n'atteigne le premier échangeur de chaleur (2).

14. Véhicule équipé d'une chaîne cinématique électrique pour la propulsion du véhicule, dans lequel la chaîne cinématique électrique comprend un système de pile à combustible (20) selon l'une quelconque des revendications 9 à 13.

15. Procédé de fonctionnement d'un système de refroidissement (30) selon l'une quelconque des revendications 1 à 8, le procédé comprenant :
- la collecte ou l'évacuation à un certain débit volumique du milieu de refroidissement dans ou depuis le premier réservoir tampon de milieu de refroidissement (4a) tout en évacuant ou en collectant de manière compensatoire au même débit volumique du milieu de refroidissement qui a été refroidi dans le premier échangeur de chaleur (2) depuis ou dans le second réservoir tampon de milieu de refroidissement (4b) de sorte que le volume total de milieu de refroidissement contenu dans les premier et second réservoirs tampons de milieu de refroidissement (4a, 4b) reste le même.

16. Procédé de fonctionnement d'un système de refroidissement (30) selon la revendication 2, le procédé comprenant :
- le fonctionnement de la première pompe (3) de manière à alimenter le milieu de refroidissement depuis le premier réservoir tampon de milieu de refroidissement (4a), et/ou depuis une partie amont de la conduite d'écoulement de milieu de refroidissement (32), vers et à travers le second échangeur de chaleur (2) et en outre vers le second réservoir tampon de milieu de refroidissement (4b).

17. Procédé de fonctionnement d'un système de refroidissement (30) selon la revendication 3, le procédé comprenant :
- faire fonctionner la seconde pompe (5) de manière à alimenter en milieu de refroidissement à partir du second réservoir tampon de milieu de refroidissement (4b), et/ou à partir d'une partie en aval de la conduite d'écoulement de milieu de refroidissement (32), plus en aval et hors de la conduite d'écoulement de milieu de refroidissement (32).

18. Procédé de fonctionnement d'un système de pile à combustible (20) selon l'une quelconque des revendications 10 à 13, dans lequel le système de pile à combustible (20) est équipé d'un système de refroidissement (30) selon les revendications 3 à 5, le procédé comprenant :
- l'alimentation du premier composant combustible à travers la conduite d'alimentation en combustible via le dispositif d'expansion (1) et le premier échangeur de chaleur (2) jusqu'à l'ensemble combustible (10) ;
- le fonctionnement de l'ensemble de pile à combustible (10) ;
- le fonctionnement de la pompe primaire (7) de manière à fournir un flux de recirculation du milieu de refroidissement qui traverse la structure de refroidissement de la pile à combustible (9) ; et
- le fonctionnement de la première pompe (3) de manière à alimenter le milieu de refroidissement depuis le premier réservoir tampon de milieu de refroidissement (4a), et/ou depuis une partie amont de la conduite d'écoulement de milieu de refroidissement (32), vers et à travers le premier échangeur de chaleur (2) et en outre vers le second réservoir tampon de milieu de refroidissement (4b).

19. Procédé selon la revendication 18, dans lequel les moyens de régulation de débit (5, 6) sont réglés dans un mode empêchant l'écoulement du milieu de refroidissement entre la boucle de refroidissement primaire (31) et la conduite d'écoulement de milieu de refroidissement (32), et dans lequel le premier réservoir tampon de milieu de refroidissement (4a) n'est pas vide et le second réservoir tampon de milieu de refroidissement (4b) n'est pas plein, le procédé comprenant :
- le fonctionnement de la première pompe (3) de manière à alimenter le milieu de refroidissement depuis le premier réservoir tampon de milieu de refroidissement (4a) à travers le premier échangeur de chaleur (2) et plus loin dans le second réservoir tampon de milieu de refroidissement (4b) de manière à collecter et augmenter une quantité de milieu de refroidissement refroidi stocké dans le second réservoir tampon de milieu de refroidissement (4b) tout en réduisant la quantité de milieu de refroidissement stockée dans le premier réservoir tampon de milieu de refroidissement (4a).

20. Procédé selon la revendication 18, dans lequel les moyens de régulation de débit (5, 6) sont réglés dans un mode permettant l'écoulement du milieu de refroidissement entre la boucle de refroidissement primaire (31) et la conduite d'écoulement de milieu de refroidissement (32), le procédé comprenant :
- le fonctionnement de la seconde pompe (5) de manière à alimenter le milieu de refroidissement provenant du second réservoir tampon de milieu de refroidissement (4b) et/ou du premier échangeur de chaleur (2) dans la boucle de refroidissement primaire (31) via la partie de conduite d'écoulement de sortie.
